# EUROPEAN PATENT SPECIFICATION

(11) **EP 0 930 276 B1**
(45) Date of publication and mention of the grant of the patent: **16.06.2004**
(21) Application number: 98124746.3
(22) Date of filing: 28.12.1998
(51) Int. Cl.: C03B 7/16

(54) **A supply unit for conveying gobs of glass to a mould of a machine for forming glass articles**
Vorrichtung zum Überführen von Glastropfen in Formen einer Glasformmaschine
Unité d'alimentation des paraisons en verre vers un moule d'une machine de fabrication d'objets en verre

(30) Priority: 13.01.1998 IT TO980022
(43) Date of publication of application: 21.07.1999
(73) Proprietor: BOTTERO S.p.A., 12010 Cuneo (IT)
(72) Inventor: Simondi, Carlo, 12010 Spinetta (IT); Basso, Gianpiero, 12081 Beinette (IT); Armando, Lorenzo, 12100 Cuneo (IT)
(74) Representative: Jorio, Paolo

(56) References cited:
- EP-A- 0 118 293
- EP-A- 0 480 642
- EP-A- 0 564 090
- EP-A- 0 658 518
- DE-A- 19 501 762

## Description

The present invention concerns a supply unit for conveying gobs of glass to a mould of a machine for forming glass articles.

In the glass industry, in order to manufacture glass articles it is known to utilise forming machines including a plurality of aligned forming moulds, and a supply unit which supplies a succession of gobs of glass to each supply. The supply unit includes a gob distributor and, for each forming mould, an associated delivery unit which receives the gobs of glass from the distributor and conveys them to the associated mould. The known delivery units usually include an inclined channel which receives the gobs from the distributor, a deflector interposed between the output of the channel and the associated mould, and an adjustable device which supports the deflector, which device enables the adjustment of the position of the deflector with respect to the associated channel and the associated mould.

In most of the applications, each support device includes first and second hinged link assemblies which enable the relative rotation of the deflector with respect to the channel about two axes, one of which is vertical and the other orthogonal to the axis of the associated channel itself.

The known support devices of the type described above, although widely used, are unsatisfactory in that, especially following the adjustment of the position of the deflector about the vertical axis, the position of the advancement path of the gobs that extends into the channel-deflector interface zone exhibits sharp variations in direction. As a result of these sharp variations, the gobs collide violently with the walls of the deflector and become deformed in unpredictable manner and, in some cases, become separated from the inner surface of the deflector such as to follow an unpredictable path, either along the deflector, or into the associated mould. The deformation of the gobs and the impossibility of guiding them along certain predetermined paths give rise to a continuous, unpredictable and undesirable variation in the quality of finished product.

The object of the invention is to manufacture a delivery unit which enables the problems described above to be overcome simply and economically.

According to the present invention there is realized a glass gob delivery unit in a glass article forming machine having a forming mould, which is selectable from a plurality of moulds for molding corresponding articles, said delivery unit being adapted to convey glass gobs from a gob distributor to the selected mould and including an inclined rectilinear guide channel having a longitudinal axis and adapted to receive glass gobs from said distributor, a curved deflector for directing glass gobs in transit along said channel towards said mould, said deflector having an inclined inlet portion adapted to receive glass gobs from said channel, said inlet portion having an aperture coaxial with the axis of said channel, said deflector having also a substantially vertical outlet portion facing said mould, an adjustable positioning device for positioning said outlet portion according to the selected mould, and an adjustment support device connected to said inlet portion and to a fixed frame for positioning said inlet portion when said outlet portion is positioned by said positioning device, said support device including a first support structure enabling said deflector to rotate with respect to said channel about at least one axis, characterised in that said at least one axis is a virtual axis substantially aligned with the axis of said channel, said support device further including a second support structure enabling the aperture of said inlet portion to move along a path substantially aligned with the axis of said channel.
Figure 1 schematically illustrates, with parts removed for clarity, a machine for forming glass articles provided with a preferred embodiment of a gob delivery unit manufactured according to the present invention;
Figure 2 illustrates, partially on an enlarged scale, the gob delivery unit of Figure 1;
Figure 3 is similar to Figure 2 and illustrates, on a reduced scale and with parts removed for clarity, the gob delivery unit of Figure 2; and
Figures 4 and 5 are sections on an enlarged scale taken, respectively, on the line IV-IV and on the line V-V of Figure 2.

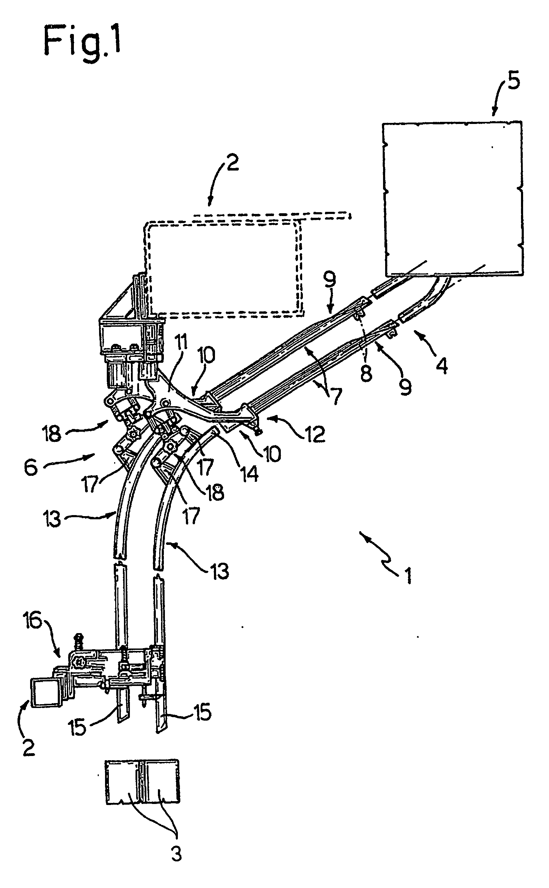

In Figure 1, the reference numeral 1 generally indicates a machine for the production of glass articles including a fixed frame 2, a group of aligned moulds 3 disposed close to each other, each mould 3 being selectable from a plurality of moulds for molding corresponding articles. The machine 1 also includes a supply unit 4 for advancing a succession of gobs of glass, not shown, towards each of the moulds 3. The unit 4 includes a gob distributor 5, known and not described in detail and, for each mould 3, a gob delivery unit 6 interposed between the distributor 5 and the associated mould 3 for guiding the gobs along a predetermined path in advance.

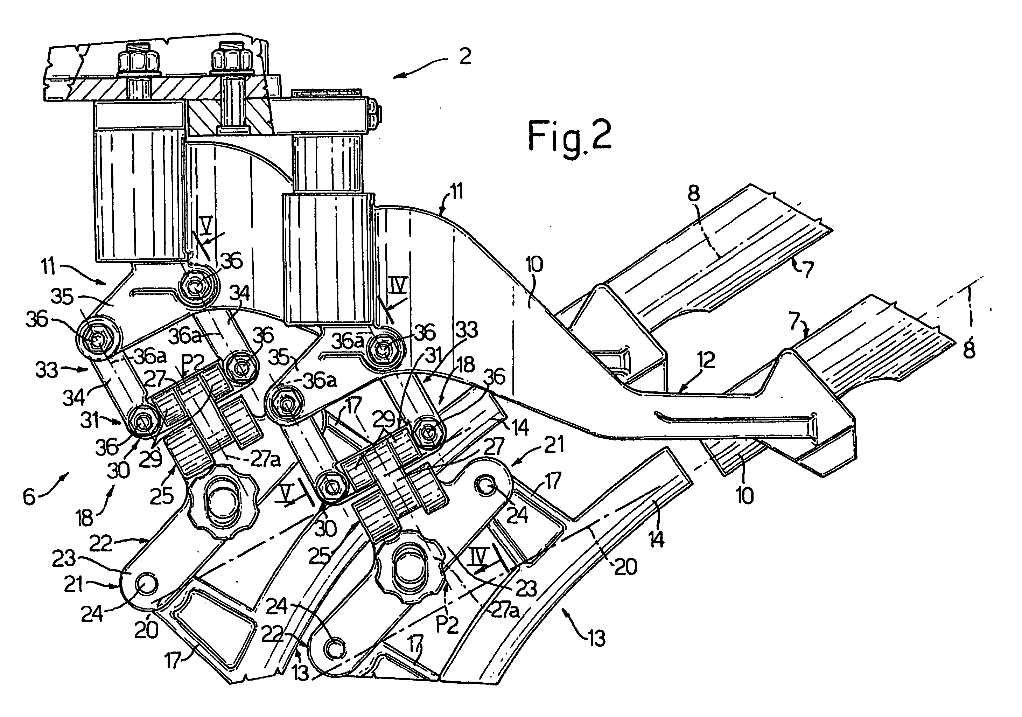

With reference to Figures 1 and 2, the delivery units 6, only two of which are visible in Figure 1, include respective inclined upper channels 7, which have respective rectilinear axes 8 extending fan-like from the distributor 5 and forming, together with a horizontal plane, respective angles of inclination, the value of which depends, as is known, on the axial position of the associated mould 3 and which, in any case, differ from each other by several degrees, generally not by more than 5-6 degrees. Each channel has an associated inlet portion 9 hinged in known manner to the frame 2, and an associated outlet portion 10 supported by an associated bracket 11 which is firmly connected to the frame 2, and with which is associated a device 12, known and not described in detail, for adjusting the angular position of the associated channel 7.

Still with reference to Figures 1 and 2, each delivery unit 6 further includes a known curved deflector 13 which receives the gobs of glass from the associated channel 7 and guides them into the associated mould 3. In particular, each deflector 13 has an inlet portion 14 having an aperture coaxial with the axis 8, located close to the outlet portion 10 of the associated channel 7, and not coupled to the portion 10 itself. The deflector 13 has also an outlet portion 15 coupled to the frame 2 by means of an adjustable positioning device 16 which enables, in use, the portion 15 to be brought and kept exactly in correspondence with an inlet aperture of the selected associated mould 3.

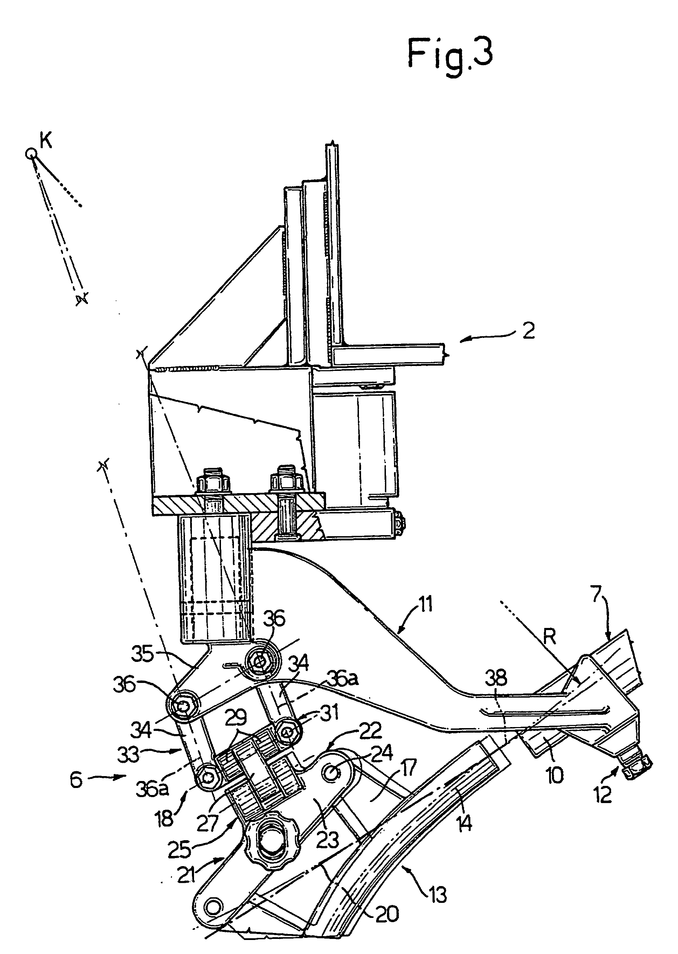

Each deflector 13 has a pair of attachment bosses or projections17, and is coupled to the associated bracket 11 by an adjustment support device indicated 18 which, during the operation of the positioning device 16, enables the adjustment of the position of the single deflector 13 with respect to the mould 3. In particular, each device 18 enables the associated deflector 13 to rotate about a respective virtual axis 20 (Figures 2 and 3) which lies in a plane of symmetry P1 of the associated deflector 13, is substantially aligned with the axis 8 of the associated channel 7, and forms, with the above-mentioned horizontal plane, an angle the value of which is substantially equal to the median value of the angles of inclination of the channels 7. Under these conditions, the angles of inclination of the virtual axes 20 differ slightly from the angles of inclination of the corresponding channel 7 by a relatively small amount, usually not greater than 2-3 degrees, so that each virtual axis 20 can be considered as practically coincident with the axis of the associated channel 7. Alternatively, in an embodiment that is not shown, each virtual axis 20 forms, together with the aforesaid horizontal plane, an angle that is exactly equal to the angle of inclination of the corresponding channel 7.

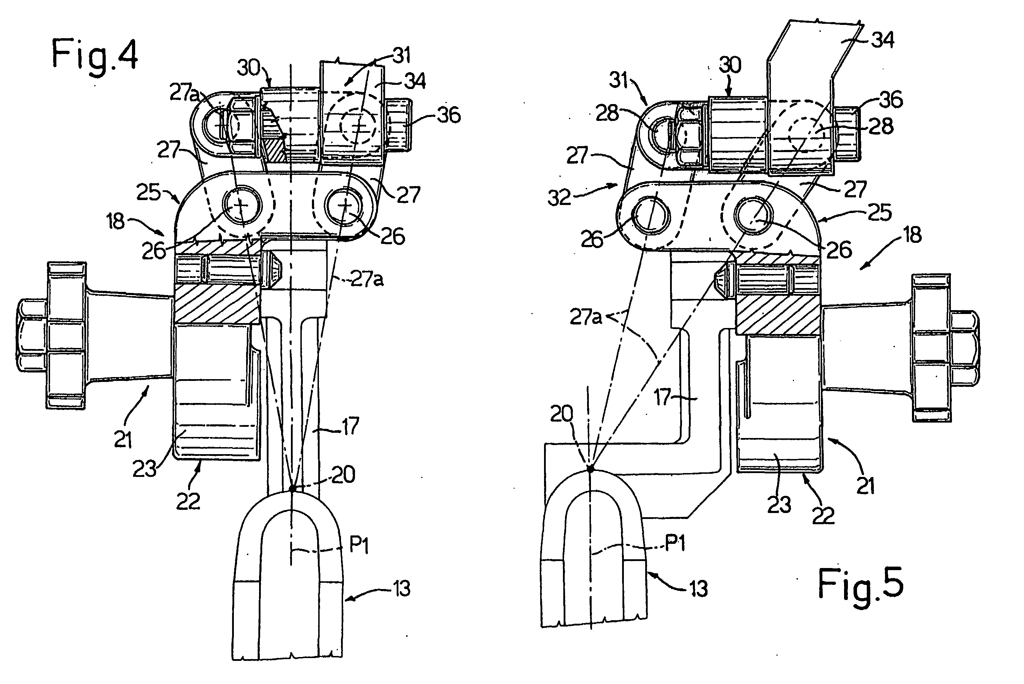

As shown in more detail in Figures 2 to 4, each device 18 includes a rapidly replaceable unit 21, in itself known, an L-shaped bracket 22 of which has a first plate-like portion 23 connected to the projections 17 by pins 24 orthogonal to the axis 20, and a fork-like portion 25 extending orthogonally to the portion 23 and to the axis 20. The ends of a pair of facing connecting rods 27 are hinged to the portion. 25 by means of pins 26 parallel to the axis 20 (Figure 4 and Figure 5), the opposite ends of which rods 27 are hinged, by means of pins 28 parallel to pins 26, to counterposed brackets 29 located on opposite sides of a cross-bar 30 to define, together with the brackets 29, a cross member 31. The connecting rods 27 define, together with the brackets 29 and the fork-like portion 25, an articulated quadrilateral structure 32, the portion 25 and the brackets 29 forming a first and a second cross-piece of the structure 32. As shown, in particular in Figure 4, the connecting rods 27 are equal to each other and have respective axes 27a which lie in a plane orthogonal to the axis 20, which is indicated P2 in Figure 2, and mutually converge towards the related deflector 13 at the intersecting point of the axis 20 with the plane P2. However, as shown in Figure 5, because of space requirements, the connecting rods 27 result displaced laterally in an asymmetric manner with respect to the plane P1, and have dimensions and inclinations so as to form a link that is geometrically and functionally similar to that of Figure 4 described above.

Still with reference to Figures 2 to 4, the cross-bar 30 of the cross member 31 forms part of a second articulated quadrilateral structure 33, which, iri turn, includes two further connecting rods 34 dimensionally equal to each other, each having an end portion hinged to an associated end of the bar 30 and an opposite portion hinged to a projection 35 of the associated bracket 11 by means of parallel pins 36 orthogonal to the axis 20, the projection 35 and the cross-bar 30 forming a first and a second cross-piece of the structure 33. The connecting rods 34 have associated axes 36a which lie on a plane orthogonal to the plane P2 and, in the particular example described, converge towards each other and towards the associated projection 35, and intersect at a point K to form an angle substantially equal to 2.7 degrees.

In use, and considering for simplicity of explanation a single delivery unit 6, during the adjustment of the position of the deflector 13 controlled by means of the device 16, for example following a mould change, the movement of the output portion 15 in a first direction, substantially parallel to that of alignment of the moulds 3, causes structure 32 to rotate the deflector 13 about the associated virtual axis 20. Given the particular position of the virtual axis 20, during the aforesaid adjustment, the input portion 14 of the deflector 13 rotates practically about the axis 8 of the associated channel 7, remaining in a position aligned with the channel 7 itself, whereby localised variations or sharp deviations of the path of the gobs are never generated in the channel-deflector zone, and on leaving the channel 7, the gobs, differently from the known arrangements, do not substantially change their motion and continue, instead, along their path of advance, staying in contact with the inner surface of the deflector 13 and practically conserving the initial geometric and dimensional characteristics.

On the other hand, in use, the movement of the output portion 15 of the deflector 13 in a second direction, substantially perpendicular to the first direction, causes the structure 33 to move the aperture of the input portion 14 of the deflector 13 with respect to the channel 7 along a path 38 that, in the particular example described, is defined by an arc of circle having its centre point K and a radius R, the value of which depends on the relative inclination of the connecting rods 34. In the particular example described, the connecting rods 34 together form a relatively small angle, corresponding to a very large radius R and, in particular, of the order of 1.8 metres. In these conditions, it is clear that the arc extending in to the channel-deflector passage zone, that is, along which the aperture of the input, portion 14 of the deflector 13 moves, can reasonably be approximated with a line which coincides substantially with the axis 8 of the channel 7 and, as said above, substantially with the axis 20, and constitutes substantially a continuation of the axis 8 itself.

On the other hand, the input portion 14 of the deflector 13 would move parallel to itself along a path, in the event that two connecting rods 34 were located parallel to each other. It has been established experimentally that, since this disposition of the connecting rods 34 enables the input portion 14 of the deflector 13 to move in parallel manner, this movement is thus subordinate to the application of relatively high movements which, in some cases, deform the deflector 13 which distort the adjustment of the deflector 13 itself. These movements are, on the other hand, significantly less where the connecting rods 34 converge slightly towards each other as in the example described, in which the relative angle of inclination of the connecting rods 34 and, therefore, the radius R achieves the double aim of easily moving the deflector 13 along a practically rectilinear path, and, at the same time, avoiding appreciable deformations of the deflector 13 itself. In any case, the structure 33 enables the input portion 14 of the deflector 13 to move towards and away from the output portion 10 of the channel 7 without giving rise to an appreciable relative rotation of the input portion 14 of the deflector 13 with respect to the output portion 10 of the channel 7 so that, even following this adjustment, the original path of the gobs does not have any sharp variations in direction in order to vary the position of the output portion 15 of the deflector 13.

However, it is clear from the above that the support device 18 described for the purpose of understanding two simple articulated quadrangular structures 32 and 33 lying in respective orthogonal planes is not only extremely simple from the constructional point of view, but is without doubt functionally efficient and reliable and involves extremely limited manufacturing costs.

Finally, it is clear from the above that modifications and variations may be introduced to the groups 6 described which do not depart from the claimed subject matter.

In particular, each support device 18 can be coupled directly to the frame 2, or to a bracket different from the support bracket 11 of the associated channel 7.

Furthermore, the two structures 32 and 33 could be manufactured in a different way from that described by way for example; not only this, but the structure 33 could be replaced by respective guide and slider devices provided with motorised operating units.

## Claims

1. A glass gob delivery unit (6) in a glass article forming machine (1) having a forming mould (3), which is selectable from a plurality of moulds (3) for molding corresponding articles, said delivery unit (6) being adapted to convey glass gobs from a gob distributor (5) to the selected mould (3) and including an inclined rectilinear guide channel (7) having a longitudinal axis (8) and adapted to receive glass gobs from said distributor (5), a curved deflector (13) for directing glass gobs in transit along said channel (7) towards said mould (3), said deflector (13) having an inclined inlet portion (14) adapted to receive glass gobs from said channel (7), said inlet portion (14) having an aperture coaxial with said axis (8), said deflector (13) having also a substantially vertical outlet portion (15) facing said mould (3), an adjustable positioning device (16) for positioning said outlet portion (15) according to the selected mould (3), and an adjustment support device (18) connected to said inlet portion (14) and to a fixed frame (2) for positioning said inlet portion (14) when said outlet portion (15) is so positioned by said positioning device (16), said support device (18) including a first support structure (32) enabling said deflector (13) to rotate with respect to said channel (7) about at least one axis (20), **characterized in that** said at least one axis (20) is a virtual axis substantially aligned with the axis (8) of said channel (7), said support device (18) further including a second support structure (33) enabling the aperture of said inlet portion (14) to move along a path (38) substantially aligned with the axis (8) of said channel (7).

2. A glass gob delivery unit according to Claim 1, **characterized in that** at least one of said support structures includes an articulated quadrilateral structure (32, 33) comprising first and second cross-pieces (25, 29; 35, 30) and a pair of connecting rods (27; 34) hinged to said cross-pieces (25, 29; 35, 30).

3. A glass gob delivery unit according to Claim 2, **characterized in that** said first support structure includes a first quadrilateral structure (32) comprising a first cross-piece (25) coupled to said input portion (14), a second cross-piece (29) coupled to said second support structure (33), and a pair of first connecting rods (27) adapted to rotate about respective axes (26) parallel to said virtual axis (20), said first connecting rods (27) having respective axes (27a) lying in a plane (P2) orthogonal to said virtual axis (20) and mutually converging at the intersecting point of said virtual axis (20) with said plane (P2).

4. A glass gob delivery unit according to Claim 3, **characterized in that** said first connecting rods (27) are equal in length.

5. A glass gob delivery unit according to Claim 3, **characterized in that** said first connecting rods (27) are different in length.

6. A glass gob delivery unit according to Claim 4 or 5, **characterized in that** said adjustment support device (18) includes attachment means (23) for attachment to said inlet portion (14), said attachment means (23) being firmly connected to said first cross-piece (25).

7. A glass gob delivery unit according to any Claim from 2 to 6, **characterized in that** said second support structure includes a second articulated quadrilateral structure (33) comprising a relevant first cross-piece (35) coupled to said fixed frame (2), a relevant second cross-piece (30) coupled to said first support structure (32), and a pair of second connecting rods (34) adapted to rotate about respective axes (36) orthogonal to said virtual axis (20).

8. A glass gob delivery unit according to Claim 7, **characterized in that** said second connecting rods (34) are equal in length and mutually converge towards the relevant first cross-piece (35).

9. A glass gob delivery unit according to Claim 8, **characterized in that** said second connecting rods (34) mutually intersect at a point (K) having a distance from the relevant first cross-piece (35) of the order of 1.8 m as to form an angle of the order of 2.7 degrees.

10. A glass gob delivery unit according to Claim 3 and any Claims from 7 to 9, **characterized in that** the second cross-piece (29) of said first quadrilateral structure (32) and the first cross-piece (35) of said second quadrilateral structure (33) form part of a cross member (31) common to both said quadrilateral structures (32, 33).

11. A glass gob delivery unit according to any Claim from 7 to 10, **characterized in that** the first cross-piece (35) of said second quadrilateral structure (33) is firmly connected to a bracket (11), which in turn firmly connects said channel (7) to said fixed frame (2).

12. A supply unit (4) for supplying gobs to a group of moulds (3) of a machine (1) for forming glass articles, said supply unit (4) including for each mould (3) of said group a glass gob delivery unit (6) according to any previous Claim, wherein the axes (8) of said channels (7) form with a horizontal plane respective angles of inclination, said angles of inclination being different from each other less than 6 degrees, **characterized in that** the virtual axis (20) of each of said deflectors (13) forms with said horizontal plane an angle substantially equal to the median value of said angles of inclination.

## Patentansprüche

1. Glastropfen-Zufuhreinheit (6) in einer Glasartikel-Formmaschine (1) mit einer Form (3), welche ausgewählt werden kann aus einer Mehrzahl von Formen (3) zum Formen entsprechender Artikel, wobei die Zufuhreinheit (6) so ausgebildet ist, dass sie Glastropfen von einem Tropfenverteiler (5) zu der gewählten Form (3) übertragen kann, und mit einem geneigten geradlinigen Führungskanal (7), der eine Längsachse (8) hat und so ausgebildet ist, dass er Glastropfen von dem Verteiler (5) aufnimmt, einem gebogenen Ablenker (13) zum Leiten der passierenden Glasstropfen entlang des Kanals (7) in Richtung der Form (3), wobei der Ablenker (13) einen geneigten Einlassabschnitt (14) aufweist, der so ausgebildet ist, dass er Glastropfen von dem Kanal (7) aufnimmt, und der Einlassabschnitt (14) eine zu der Achse (8) koaxiale Öffnung hat, wobei der Ablenker (13) auch einen im wesentlichen vertikalen, der Form (3) zugewandten Auslassabschnitt (15), eine verstellbare Positioniervorrichtung (16) zum Positionieren des Auslassabschnitts (15) entsprechend der gewählten Form (3) und eine Verstell-Stützvorrichtung (18) hat, die mit dem Einlassabschnitt (14) und einem festen Rahmen (2) verbunden ist, zum Positionieren des Einlassabschnitts (14), wenn der Auslassabschnitt (15) entsprechend von der Positiontervorrichtung (16) positioniert ist, wobei die Stützvorrichtung (18) eine erste Stützstruktur (32) beinhaltet, die es dem Ablenker (13) ermöglicht, sich in Bezug auf den Kanal (7) um mindestens eine Achse (20) zu drehen, **dadurch gekennzeichnet, dass** die mindestens eine Achse (20) eine virtuelle Achse ist, die im wesentlichen mit der Achse (8) des Kanals (7) ausgerichtet ist, wobei die Stützvorrichtung (18) weiterhin eine zweite Stützstruktur (33) beinhaltet, welche ermöglicht, dass sich die Öffnung des Eintassabschnitts (14) entlang einem Pfad (38) bewegt, der im wesentlichen mit der Achse (8) des Kanals (7) ausgerichtet ist.

2. Glastropfen-Zufuhreinheit nach Anspruch 1, **dadurch gekennzeichnet, dass** mindestens eine der Stützstrukturen eine angelenkte vierseitige Struktur (32, 33) beinhaltet mit ersten und zweiten Querträgern (25, 29; 35, 30) und einem Paar Verbindungsstäben (28; 34), die an den Querträgern (25, 29; 35, 30) angelenkt sind.

3. Glastropfen-Zufuhreinheit nach Anspruch 2, **dadurch gekennzeichnet, dass** die erste Stützstruktur beinhaltet: eine erste vierseitige Struktur (32) mit einem ersten Querträger (25), welcher mit dem Einlassabschnitt (14) gekoppelt ist, einen zweiten Querträger (29), der mit der zweiten Stützstruktur (33) gekoppelt ist, und ein Paar erster Verbindungsstäbe (27), die so ausgebildet sind, dass sie sich um jeweilige Achsen (26) parallel zu der virtuellen Achse (20) drehen, wobei die ersten Verbindungsstäbe (27) entsprechende Achsen (27a) haben, die In einer Ebene (P2) orthogonal zu der virtuellen Achse (20) liegen und beidseitig an dem Schnittpunkt zwischen der virtuellen Achse (20) und der Ebene (P2) zusammenlaufen.

4. Glastropfen-Zufuhreinheit nach Anspruch 3, **dadurch gekennzeichnet, dass** die ersten Verbindungsstäbe (27) dieselbe Länge haben,

5. Glastropfen-Zufuhreinheit nach Anspruch 3, **dadurch gekennzeichnet, dass** die ersten Verbindungsstäbe (27) unterschiedliche Längen haben.

6. Glastropfen-Zufuhreinheit nach Anspruch 4 oder 5, **dadurch gekennzeichnet, dass** die Verstell-Stützvorrichtung (18) eine Befestigungseinrichtung (23) zum Befestigen mit dem Einlassabschnitt (14) beinhaltet, wobei die Befestigungseinrichtung (23) fest mit dem ersten Querträger (25) verbunden ist.

7. Glastropfen-Zufuhreinheit nach einem der Ansprüche 2 bis 6, **dadurch gekennzeichnet, dass** die zweite Stützstruktur eine zweite angelenkte vierseitige Struktur (33) mit einem relevanten ersten Querträger (35), der mit dem festen Rahmen (2) gekoppelt ist, einen relevanten zweiten Querträger (30), der mit der ersten Stützstruktur (32) gekoppelt ist, und ein Paar zweiter Verbindungsstäbe (34) beinhaltet, die so ausgebildet sind, dass sie sich um entsprechende Achsen (36) orthogonal zu der virtuellen Achse (20) drehen,

8. Glastropfen-Zufuhreinheit nach Anspruch 7, **dadurch gekennzeichnet, dass** die zweiten Verbindungsstäbe (34) dieselbe Länge haben und beidseitig in Richtung des relevanten ersten Querträgers (35) zusammenlaufen.

9. Glastropfen-Zufuhreinheit nach Anspruch 8, **dadurch gekennzeichnet, dass** die zweiten Verbindungsstäbe (34) sich gegenseitig an einem Punkt (K) schneiden, der in einem Größenbereich von 1,8m von dem relevanten ersten Querträger (35) beabstandet ist, um einen Winkel im Bereich von 2,7 Grad zu bilden.

10. Glastropfen-Zufuhreinheft nach Anspruch 3 und einem der Ansprüche 7 bis 9, **dadurch gekennzeichnet, dass** der zweite Querträger (29) der ersten vierseitigen Struktur (32) und der erste Querträger (35) der zweiten vierseitigen Struktur (33) Teil eines Querelements (31) bilden, welches beiden genannten vierseitigen Strukturen (32, 33) gemeinsam ist.

11. Glastropfen-Zufuhreinheit nach einem der Ansprüche 7 bis 10, **dadurch gekennzeichnet, dass** der erste Querträger (35) der zweiten vierseitigen Struktur (33) fest mit einem Halter (11) verbunden ist, weicher wiederum den Kanal (7) mit dem festen Rahmen (2) fest verbindet.

12. Zufuhreinrichtung (4) zum Zuführen von Tropfen an eine Gruppen von Formen (3) einer Maschine (1) zum Formen von Glasartikeln; wobei die Zufuhreinheit (4) für jede Form (3) der Gruppe eine Glastropfen-Zufuhreinheit (6) nach einem der vorhergehenden Ansprüche beinhaltet, wobei die Achsen (8) der Kanäle (7) mit einer horizontalen Ebene entsprechende Neigungswinkel bilden, wobei die Neigungswinkel sich jeweils um einen Winkel von weniger als 6 Grad unterscheiden, **dadurch gekennzeichnet, dass** die virtuelle Achse (20) jedes der Ablenker (13) mit der horizontalen Ebene einen Winkel bildet, der im wesentlichen dem Mittelwert der Neigungswinkel entspricht.

## Revendications

1. Unité d'apport (6) de paraisons de verre dans une machine (1) de formage d'articles en verre ayant un moule de formage (3), qui est sélectionnable parmi plusieurs moules (3) destinés à mouler des articles correspondants, ladite unité d'apport (6) étant faite pour transporter les paraisons de verre venant d'un distributeur (5) de paraisons jusqu'au moule (3) sélectionné et comprenant un canal de guidage rectiligne incliné (7) ayant un axe longitudinal (8) et fait pour recevoir des paraisons de verre provenant dudit distributeur (5), un déflecteur incurvé (13) pour diriger les paraisons de verre qui passent le long dudit canal (7) vers ledit moule (3), ledit déflecteur (13) ayant une partie d'entrée inclinée (14) faite pour recevoir les paraisons de verre provenant dudit canal (7), ladite partie d'entrée (14) ayant une ouverture coaxiale audit axe (8), ledit déflecteur (13) ayant également une partie de sortie sensiblement verticale (15) faisant face audit moule (3), un dispositif de positionnement ajustable (16) pour positionner ladite partie de sortie (15) selon le moule (3) sélectionné, et un dispositif de support d'ajustement (18) relié à ladite partie d'entrée (14) et à un bâti fixe (2) pour positionner ladite partie d'entrée (14) lorsque ladite partie de sortie (15) est ainsi positionnée par ledit dispositif de positionnement (16), ledit dispositif de support (18) comprenant une première structure de support (32) permettant audit déflecteur (13) de tourner par rapport audit canal (7) autour d'au moins un axe (20), **caractérisé en ce que** ledit au moins un axe (20) est un axe virtuel sensiblement aligné avec l'axe (8) dudit canal (7), ledit dispositif de support (18) comprenant de plus une seconde structure de support (33) permettant à l'ouverture de ladite partie d'entrée (14) de se déplacer le long d'un trajet (38) sensiblement aligné avec l'axe (8) dudit canal (7).

2. Unité d'apport de paraisons de verre selon la revendication 1, **caractérisée en ce qu'**au moins l'une desdites structures de support comprend une structure quadrilatère articulée (32, 33) comprenant des première et seconde pièces transversales (25, 29 ; 35, 30) et une paire de tiges de liaison (27 ; 34) articulées sur lesdites pièces transversales (25, 29 ; 35, 30).

3. Unité d'apport de paraisons de verre selon la revendication 2, **caractérisée en ce que** ladite première structure de support comprend une première structure quadrilatère (32) comprenant une première pièce transversale (25) couplée à ladite partie d'entrée (14), une seconde pièce transversale (29) couplée à ladite seconde structure de support (33), et une paire de premières tiges de liaison (27) faites pour tourner autour d'axes respectifs (26) parallèles audit axe virtuel (20), lesdites premières tiges de liaison (27) ayant des axes respectifs (27a) se tenant dans un plan (P2) perpendiculaire audit axe virtuel (20) et convergeant mutuellement au point d'intersection dudit axe virtuel (20) avec ledit plan (P2).

4. Unité d'apport de paraisons de verre selon la revendication 3, **caractérisée en ce que** lesdites premières tiges de liaison (27) sont de longueur égale.

5. Unité d'apport de paraisons de verre selon la revendication 3, **caractérisée en ce que** lesdites premières tiges de liaison (27) sont de longueurs différentes.

6. Unité d'apport de paraisons de verre selon la revendication 4 ou 5, **caractérisée en ce que** ledit dispositif de support d'ajustement (18) comprend un moyen d'attache (23) pour la fixation à ladite partie d'entrée (14), ledit moyen d'attache (23) étant solidement lié à ladite première pièce transversale (25).

7. Unité d'apport de paraisons de verre selon l'une quelconque des revendications 2 à 6, **caractérisée en ce que** ladite seconde structure de support comprend une seconde structure quadrilatère articulée (33) comprenant une première pièce transversale correspondante (35) couplée audit bâti fixe (2), une seconde pièce transversale correspondante (30) couplée à ladite première structure de support (32) et une paire de secondes tiges de liaison (34) faites pour tourner autour d'axes respectifs (36) perpendiculaires audit axe virtuel (20).

8. Unité d'apport de paraisons de verre selon la revendication 7, **caractérisée en ce que** lesdites secondes tiges de liaison (34) sont de longueur égale et convergent mutuellement vers la première pièce transversale correspondante (35).

9. Unité d'apport de paraisons de verre selon la revendication 8, **caractérisée en ce que** lesdites secondes tiges de liaison (34) arrivent mutuellement en intersection en un point (K) situé à une distance de la première pièce transversale correspondante (35) de l'ordre de 1,8 m de manière à former un angle de l'ordre de 2,7 degrés.

10. Unité d'apport de paraisons de verre selon la revendication 3 et l'une quelconque des revendications 7 à 9, **caractérisée en ce que** la seconde pièce transversale (29) de ladite première structure quadrilatère (32) et la première pièce transversale (35) de ladite seconde structure quadrilatère (33) font partie d'un élément transversal (31) commun aux deux dites structures quadrilatères (32, 33).

11. Unité d'apport de paraisons de verre selon l'une quelconque des revendications 7 à 10, **caractérisée en ce que** la première pièce transversale (35) de ladite seconde structure quadrilatère (33) est solidement liée à une console (11) qui, à son tour, relie solidement ledit canal (7) audit bâti fixe (2).

12. Unité d'alimentation (4) pour alimenter en paraisons un groupe de moules (3) d'une machine (1) de formation d'articles en verre, ladite unité d'alimentation (4) comprenant, pour chaque moule (3) dudit groupe, une unité d'apport de paraisons de verre (6) selon l'une quelconque des revendications précédentes, dans laquelle les axes (8) desdits canaux (7) forment avec un plan horizontal des angles d'inclinaison respectifs, lesdits angles d'inclinaison différant entre eux de moins de 6 degrés, **caractérisée en ce que** l'axe virtuel (20) de chacun desdits déflecteurs (13) forme avec ledit plan horizontal un angle sensiblement égal à la valeur moyenne desdits angles d'inclinaison.
